# EUROPEAN PATENT APPLICATION

(11) **EP 0 958 953 A1**
(43) Date of publication of application: **24.11.1999**
(21) Application number: 99830223.6
(22) Date of filing: 16.04.1999
(51) Int. Cl.: B60H 1/32, F28F 9/02, F28D 1/053, F25B 39/04

(54) **A condenser for vehicles with a distributor including a header body and a bottom plate**

(30) Priority: 20.05.1998 IT TO980427
(71) Applicant: MAGNETI MARELLI CLIMATIZZAZIONE S.p.A., 10046 Poirino (Torino) (IT)
(72) Inventor: Burguete, Vasco Maria, 2135 Samora Correia (PT); Dentis, Luigi, 10142 Torino (IT)
(74) Representative: Marchitelli, Mauro

(57) **Abstract**

A condenser for air conditioning systems for vehicles, comprising at least one row of tubes (14) fixed to a plurality of fins (16), and at least one distributor (18) connected to the tubes (14) so as to permit a fluid communication therebetween. The distributor (18) comprises a header body (20) and a bottom plate (34) having a plurality of holes in which the ends of the tubes are inserted and fixed. The bottom plate (34) is inserted with interference in the header body (20) and is welded to the header body along a surface of mutual contact.

## Description

The present invention relates to a condenser for air conditioning systems for vehicles, comprising at least one row of tubes fixed to a plurality of fins, and at least one distributor connected to said tubes so as to permit fluid communication therebetween.

In known solutions, the distributors are generally formed by tubular elements closed at both ends and having slot-shaped apertures in which respective tube ends are inserted, which are fixed to the distributors by braze welding.

The problem on which the present invention is based is to provide an aluminium condenser which can be assembled in a single braze welding operation, having distributors resisting to very high pressures, of the order of 60 kg/cm², with the least possible thickness and the possibility to easily vary the geometry of the flow of cooling fluid.

According to the present invention, this object is achieved by a condenser having the characteristics forming the subject of the main claim.

The innovative aspect of the condenser according to the present invention consists essentially in that the distributor comprises a header body and a bottom plate having a plurality of holes in which the tube ends are inserted and fixed. The bottom plate is inserted into and welded to the header body along a surface of mutual contact.

This idea of solution permits to obtain a contact surface with considerable dimensions between the bottom plate and the header body, whereas the thickness of the distributor can be very close to the thickness of the tubes-fins pack. This arrangement has an high resistance to pressure and offers the possibility to vary the position of internal separating baffles which define the inner path of the cooling fluid. In addition, the braze welding operation is simplified because the pieces to be welded to each other have similar thickness.

Further characteristics and advantages of the invention will become clear in the course of the detailed description which follows, given purely by way of non-limiting example, with reference to the appended drawings, in which:

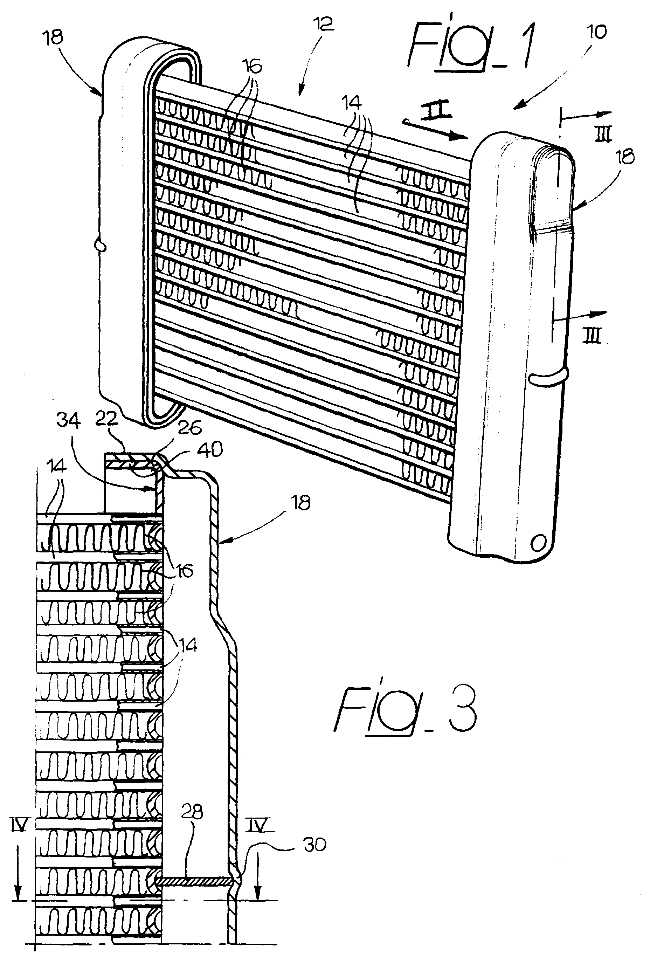

- figure 1 is a schematic perspective view of a condenser according to the present invention,

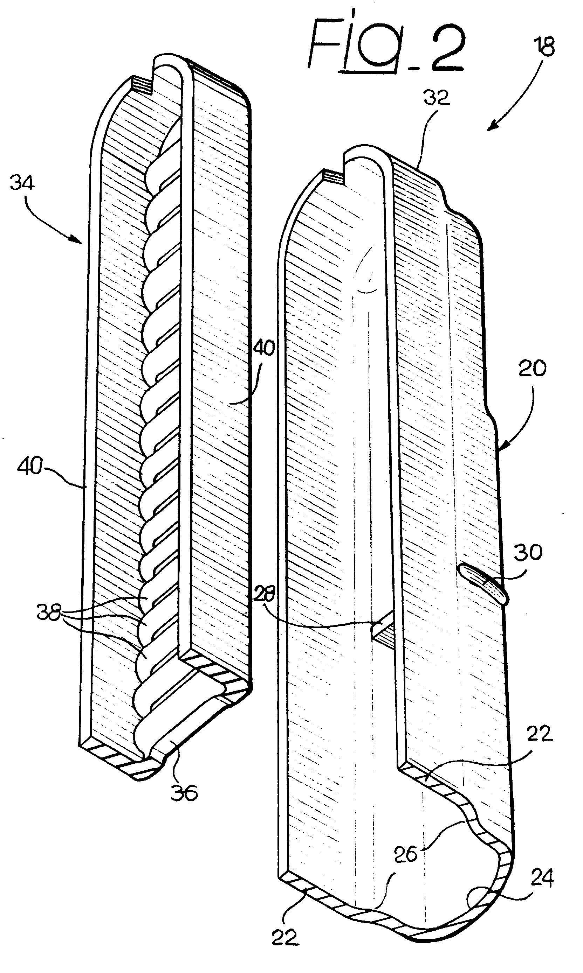

- figure 2 is an exploded perspective view of a distributor indicated by arrow II in figure 1,
- figure 3 is a cross-section taken along line III-III of figure 1,
- figure 4 is a cross-section taken along line IV-IV of figure 3, and
- figure 5 is a partial perspective and cross-sectional view of the condenser of figure 1.

With reference to the drawings, 10 indicates a condenser for air conditioning systems for vehicles, comprising a heat exchange pack 12 which is formed, in a way per se known, by a row of flat tubes 14 and by fins 16 formed by ondulated metal sheets interposed between the tubes.

The condenser 10 comprises a pair of distributors 18 arranged on opposite sides of the heat exchange pack 12. Each distributor 18 comprises a header body 20 made of aluminium and having a cross-section substantially U-shaped. The header body 20 has two substantially parallel lateral walls 22 and an arcuate bottom wall 24. In correspondence with the ends of the header body 20, the lateral walls 22 form a closed radius zone 32. The lateral walls 22 have an inwardly deformed zone 26 defining an abutment section. The header body 20 has also at least one seat for a baffle 28 for separating the flow of cooling fluid. Such seat is easily obtained by outwardly deforming the lateral walls 22 and the bottom wall 24 so as to form a shallow grove for receiving the baffle 28. The seat 30 can be arranged in any position along the longitudinal axis of the header body 20 and the separating baffle or baffles 28 are easily inserted through the open side of the header body 20.

Each distributor 18 further comprises an aluminium bottom plate 34 with a U-shaped cross section. The bottom plate 34 has a wall 36 with a plurality of through cuts 38 with an elongated shape, in which are inserted the ends of the tubes 14. The edges of the through apertures 38 are bent inwardly so as to form collars surrounding the ends of the tubes 14. The bottom plate 34 has bent pherimetral edges so as to form fixing walls 40 with shape and dimensions which permit introduction of the bottom plate 34 in the header body 20 with slight interference.

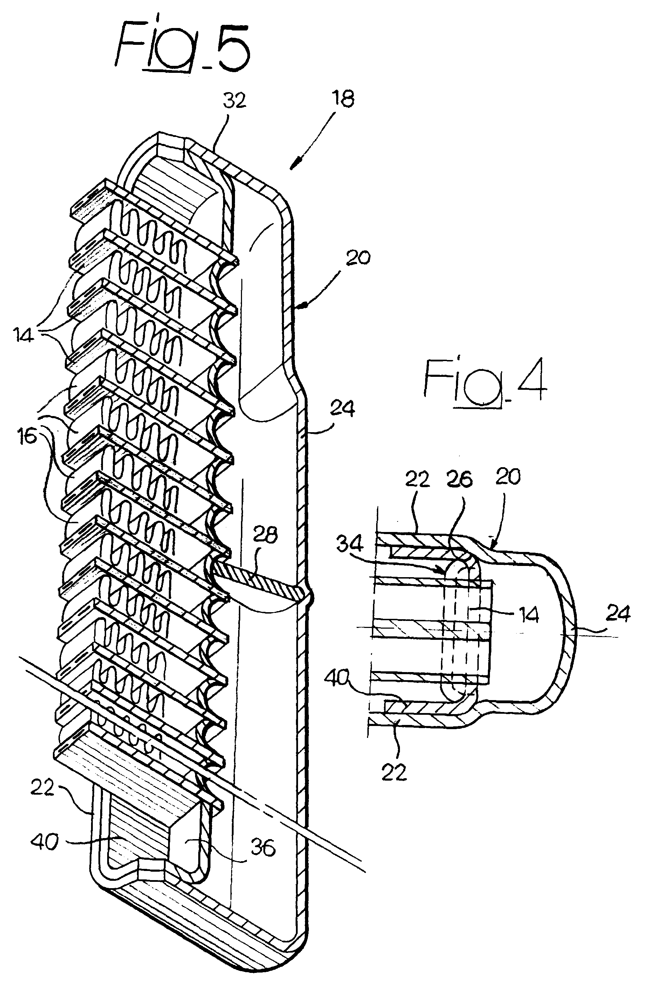

As shown in figures 3, 4 and 5, the bottom plate 34 is in contact with the separating baffle or baffles 28 in a zone comprised between two adjacent apertures and rests against the arcuate shoulder formed by the inwardly deformed portions 26 of the lateral walls 22. The baffle or baffles 28 divide the inner volume of the header body 20 in two or more chambers communicating with respective tubes 14.

The condenser according to the invention is assembled as follows. The tubes-fins pack 12 is formed in a way per s known and the bottom plates 34 are fixed to the ends of the pack 12 by inserting the ends of tubes 14 in the respective apertures 38 with slight interference. The separating baffle or baffles 28 are placed in the respective seats 30 and then the bottom plate 34 is inserted in the respective header body 20. The bottom plate 34 by virtue of its geometry and the tapering of the header body is restrained between the lateral walls 22 of the body 20. After having assembled in this way the whole condenser 10, it is braze welded in a single operation by passage through an oven. The shape of the bottom plate 34 and the header body 20 and the wide surface of mutual contact along the walls 22, 40 improve the braze welding process. Preferably, the bottom wall 36 of the plate 34 is not perfectly planar but has a curvature which permits to obtain an improved resistance to the operating pressures.

## Claims

1. A condenser for air conditioning systems for vehicles, comprising at least one row of tubes (14) fixed to a plurality of fins (16), and at least one distributor (18) connected to said tubes (14) so as to permit fluid communication therebetween, characterized in that the distributor (18) has a header body (20) and a bottom plate (34) having a plurality of holes (38) in which the ends of the tubes (14) are inserted and fixed, the bottom plate (34) being inserted with interference in the header body (20) and being welded to the header body (20) along a surface of mutual contact.

2. A condenser according to claim 1, characterized in that the bottom plate (34) has a base wall (36) having bent edges (40) which are inserted with interference between lateral walls (22) of the header body (20).

3. A condenser according to claim 1, characterized in that the header body (20) has at least one seat (30) for positioning a baffle (28) for separating the flow of cooling fluid, said seat (30) including a grove formed by plastic deformation of the walls of the header body (20).

4. A condenser according to any of the preceding claims, characterized in that the header body (20) has a substantially U-shaped cross section, with a pair of rectilinear lateral walls (22) which have a narrow section (26) forming a positioning surface for the bottom plate (34).
